# EUROPÄISCHE PATENTSCHRIFT

(11) **EP 1 304 302 B1**
(45) Veröffentlichungstag und Bekanntmachung des Hinweises auf die Patenterteilung: **22.12.2004**
(21) Anmeldenummer: 01124769.9
(22) Anmeldetag: 17.10.2001
(51) Int. Cl.: B65G 23/06

(54) **Bandtransportanlage mit minimiertem Polygoneffekt**
Belt conveyor with minimized polygon effect
Système de transport par bande avec effet polygonal minimisé

(43) Veröffentlichungstag der Anmeldung: 23.04.2003
(73) Patentinhaber: Siempelkamp Handling Systeme GmbH & Co., 82515 Wolfratshausen (DE)
(72) Erfinder:
(74) Vertreter: Szynka, Dirk

(56) Entgegenhaltungen:
- DE-A- 3 542 198
- DE-A- 19 849 236
- DE-C- 3 990 012
- US-A- 5 697 486

## Beschreibung

Die vorliegende Erfindung bezieht sich auf eine Bandtransportanlage, wie sie beispielsweise als Doppelbandanlage zur Herstellung von plattenartigen Materialien verwendet wird. Die Erfindung ist dabei jedoch nicht auf das Vorhandensein zweier Bänder oder auf die Herstellung von Plattenmaterialien eingeschränkt.

Eine Bandtransportanlage im Sinn der Erfindung soll ein Strang langgestreckten Materials oder auch Stückgut entlang einer Transportstrecke transportieren, wobei das Material an einem Transportband anliegt. Das Transportband besteht aus einer Gliederkette oder ist mit einer das Transportband antreibenden Gliederkette verbunden, beispielsweise indem die Gliederkette gliedweise mit Platten verbunden ist, die das Band aufbauen.

Insbesondere kann es sich dabei um Pressplatten und bei der Bandtransportanlage dabei um eine Bandpressanlage handeln. Der hauptsächlich interessierende Anwendungsbereich liegt, wie eingangs festgestellt, bei Doppelbandanlagen. Bei diesen werden zwischen zwei Pressbändern Materialien mit einer vorbestimmten Dicke, die durch den Abstand der beiden Pressbänder vorgegeben ist, transportiert und in der Regel dabei geheizt. Solche Doppelbandanlagen dienen beispielsweise zur Herstellung von Sandwichplattenmaterialien mit zwischen Deckschichten eingeschlossenen Schaumkernen oder zur Herstellung anderer Plattenmaterialien für die Möbel- oder Bauindustrie.

Soweit bei Bandtransportanlagen eine Gliederkette Verwendung findet, wird diese über zumindest ein Antriebskettenrad angetrieben und ist dazu über das Antriebskettenrad geführt. Die Glieder der Gliederkette bilden bei der Führung über das Antriebskettenrad infolge der Starrheit und der endlichen Ausdehnung der Glieder keinen Kreisausschnitt, sondern vielmehr einen Polygonzug. Der Polygonzug ergibt sich in der der Achsenrichtung des Antriebskettenrades entsprechenden Perspektive und wird durch die in dieser Perspektive Punkte ergebenden Gelenkachsen der Gelenke zwischen den Gliedern und die den Gliedern entsprechenden geraden Strecken definiert. Infolge dieses Umstands kommt es zu einer relativ komplexen Beziehung zwischen der Umdrehungsbewegung des Antriebskettenrades und der Bewegung eines an das Antriebskettenrad anschließenden geraden (oder auch konstant gekrümmten) Trums der Gliederkette, entlang dem die Glieder langgestreckt laufen. Diese Beziehung ist als Polygoneffekt bekannt und führt dazu, dass eine gleichförmige Bewegung des Antriebskettenrades nicht mit einer gleichförmigen Bewegung des Trums verbunden ist und umgekehrt. Allgemeiner gesagt muss der Polygoneffekt bei der Ansteuerung des Antriebs des Antriebskettenrades berücksichtigt werden, wenn eine bestimmte Transportbewegung entlang dem Trum erwünscht ist. Die Umsetzung in das Trum kann eben nicht wie bei einem gliederfreien Transportband aus flexiblem Material einfach durch Multiplikation der Winkelgeschwindigkeit mit dem entsprechenden Radius berücksichtigt werden.

Die US 5 697 486 befasst sich mit einer Bandtransportanlage für Aufzüge oder Laufbänder bzw. Rolltreppen. Es ist von einer gekrümmten Führungsschiene die Rede, die die Betriebseigenschaften dadurch verbessern soll, dass der Polygoneffekt vermieden wird.

Die DE 35 42 198 befasst sich mit einem Doppelplattenband zur kontinuierlichen Herstellung von Schaumstoffblöcken. Dabei soll der Polygoneffekt vermieden werden.

Die DE 39 90 012 betrifft eine Anlage zum Transport von Werkstückträgern, die sich durch eine Höhenführungsbahn in der Umlenkstation zum Ausgleich des durch die Umlenkscheibe bedingten Polygoneffekts auszeichnet.

Der Erfindung liegt das technische Problem zugrunde, eine günstige Lösung zur Vermeidung der mit dem Polygoneffekt verbundenen Probleme bei Bandtransportanlagen anzugeben.

Die Erfindung richtet sich auf ein Verfahren zum Herstellen einer Bandtransportanlage zum Transport von Material entlang einer Transportstrecke, bei welcher Bandtransportanlage eine Gliederkette mit über Gelenke verbundenen Gliedern über ein Antriebskettenrad geführt ist und ein gerades oder konstant gekrümmtes Trum im Bereich der Transportstrecke aufweist, bei welchem Verfahren die Gliederkette über das Antriebskettenrad geführt wird und eine Führungsschiene zum Führen der Gliederkette zwischen dem Antriebskettenrad und dem Trum entlang einer Kettenübergangsbahn angebracht wird, die Führungsschiene so ausgelegt wird, dass die Gliederkette bei dem Übergang zwischen dem Trum und dem Antriebskettenrad entlang der Übergangskettenbahn Polygonanregungen längs der Gliederkette erfährt, die sich insgesamt weitgehend kompensieren, und für die Form der Führungsschiene ein Ansatz verwendet wird, der zwischen dem Übertritt zwischen dem geraden Trum und der Kettenübergangsbahn einerseits und dem Übertritt zwischen der Kettenübergangsbahn und dem Antriebskettenrad andererseits zumindest eine weitere Stelle aufweist, die zu Polygonanregungen führt, dadurch gekennzeichnet, dass der Ansatz ein an das Trum anschließendes Kreisbogenbahnstück und ein weiteres gerades Bahnstück enthält.

Die Erfindung richtet sich außerdem auf eine in dieser Weise ausgestaltete Bandtransportanlage nach Anspruch 11. Bevorzugte Ausführungsformen der Erfindung sind in den abhängigen Ansprüchen angegeben und werden im Folgenden näher erläutert.

Zunächst geht die Erfindung davon aus, dass eine kontrollierte Bewegung des geraden Trums (im Folgenden wird ohne Einschränkung von geraden Trumen ausgegangen) der Bandtransportanlage, falls möglich, günstiger über eine die Geometrie der Führung der Gliederkette betreffende Lösung sichergestellt werden sollte als über eine Anpassung des Antriebs des Antriebskettenrades. Durch die erfindungsgemäßen Maßnahmen soll insbesondere nach Möglichkeit sowohl die Bewegung des Antriebskettenrades als auch die Bewegung des geraden Trums möglichst gleichförmig erfolgen können.

Zum Zweiten geht die Erfindung davon aus, dass die konventionelle Maßnahme einer möglichst großen Zähnezahl des Antriebskettenrades aus verschiedenen Gründen eine unbefriedigende Einengung des Freiraumes bei der Konstruktion einer Bandtransportanlage mit sich bringt. Es soll möglich sein, die Länge der Glieder, also die Teilungslänge der Gliederkette, nicht allzu klein zu wählen, weil dies für verschiedene Anwendungen wegen Kostenerwägungen oder weil zwischen den Gliedern bzw. darauf montierten Platten eine relativ gute Abdichtung erfolgen soll, unerwünscht ist. Außerdem ist es erwünscht, eine zu große Abmessung des Antriebskettenrades zu vermeiden, um sowohl in der Richtung senkrecht zu dem geraden Trum als auch in der Richtung des geraden Trums keine zu groß bauende Bandtransportanlage zu erhalten.

Die Erfindung geht dabei von der Überlegung aus, dass es geschickt ist, nicht den Polygoneffekt als solches zu minimieren, etwa indem Krümmungen oder Teilungslängen verkleinert werden. Stattdessen sollen an sich bestehende Polygonanregungen hingenommen werden, jedoch gezielt zueinander so ins Verhältnis gesetzt werden, dass sie sich gegenseitig weitgehend kompensieren. "Weitgehend" soll dabei bedeuten, dass die insgesamt verbleibende Polygonanregung deutlich kleiner ist als die Größe der einzelnen Polygonanregungen. Im Unterschied zu einer konventionellen Anordnung, bei der der Übergang von dem geraden Trum auf das Antriebskettenrad direkt erfolgt, sollen also bei der Erfindung zumindest zwei, vorzugsweise mehr als zwei, einzelne Polygonanregungen in diesem Übergang vorkommen. Deren Amplituden und Phasenbeziehungen untereinander werden dann erfindungsgemäß so optimiert, dass die verbleibende Gesamtpolygonanregung tragbar bleibt bzw. minimiert wird. Dabei liegt der Erfindung nicht notwendigerweise das Ziel zugrunde, die Gesamtpolygonanregung tatsächlich auf Null zu bringen. Gewisse Restpolygonanregungen können je nach Anwendungsfall tragbar sein bzw. gegenüber anderen Störungen in den Hintergrund treten.

Der Klarheit halber ist zu beachten, dass schon der Übertritt der Gliederkette von dem geraden Trum in den Bereich der durch die Führungsschiene vorgegebenen Kettenübergangsbahn bzw. umgekehrt und auch der Übertritt von der Kettenübergangsbahn zu dem Antriebskettenrad bzw. umgekehrt mit Polygonanregungen verbunden sind bzw. sein können, die zu den erfindungsgemäß zu berücksichtigenden Polygonanregungen zählen. In anderen Worten: Die am Rand der erfindungsgemäßen Kettenübergangsbahn auftretenden Polygonanregungen sind mit zu berücksichtigen.

Im Übrigen kann die Führungsschiene mehrteilig sein. Im Folgenden wird dennoch, soweit von einem Übergang zwischen einem geraden Trum und einem Kettenantriebsrad die Rede ist, von einer Führungsschiene und einer Kettenübergangsbahn gesprochen. Wenn von mehreren Führungsschienen gesprochen wird, so sind damit mehrere solche Übergänge, also beispielsweise die beiden Übergänge beidseits desselben Kettenantriebsrades gemeint.

Im Übrigen ist bei der Erfindung ein Ansatz vorgesehen, der zwischen den bereits erwähnten randseitigen Anregungen in den Übertritten zwischen Kettenübergangsbahn und geradem Trum einerseits und Antriebskettenrad andererseits zumindest eine weitere Stelle im Bereich der Kettenübergangsbahn selbst aufweist, die zu Polygonanregungen führt. Dies geschieht durch einen erfindungsgemäßen Ansatz mit einem Kreisbogenbahnstück und einem weiteren geraden Bahnstück, wobei im Übergang zwischen diesen beiden Bahnstücken eine Polygonanregung erfolgt, weil sich der Krümmungsradius deutlich ändert.

Vorzugsweise wird die Kettenübergangsbahn der Gliederkette durch ein Computeroptimierungsverfahren errechnet. Dazu muss ein Rechenmodell gebildet werden, mit dem die einzelnen Polygonanregungen, die auch kontinuierlich entlang der Kettenübergangsbahn erfolgen können, berücksichtigt und in Abhängigkeit verschiedener zu variierender Parameter errechnet werden können. Mit einem bekannten Minimierungsalgorithmus kann man dann den oder die optimalen Parametersätze ermitteln. Es ist dabei auch nicht notwendig, ein analytisches Modell zu formulieren, weil ein numerisches Ergebnis für die konstruktiven Zwecke völlig ausreicht.

Es kann auch so vorgegangen werden, dass unter der Randbedingung einer Gesamtpolygonanregung von Null eine bestimmte Kettenübergangsbahn errechnet oder korrigiert wird. Beide Vorgehensweisen können auch kombiniert werden, wie im Folgenden noch näher ausgeführt.

Erfindungsgemäß ist dabei die Kettenübergangsbahn vorzugsweise deutlich länger als die Gliedteilungslänge der Gliederkette, weil dadurch ein etwas größerer Freiraum bei der Optimierung entsteht. Diese Vorgehensweise ist günstig, obwohl damit andererseits im Hinblick auf die Baulänge und Baugröße Nachteile verbunden sind.

Es hat sich bewährt, für die Form der Führungsschiene, wenn diese zur Optimierung modellhaft vorgegeben wird, einen Ansatz mit zumindest drei optimierbaren Variablen zu verwenden. Aus rechnerischen Gründen kann es günstig sein, einen Ansatz zu verwenden, der ausschließlich Kreisbogenbahnstücke und gerade Bahnstücke enthält. Dies hat den Vorteil, dass die Polygonanregungen nur in den Übergängen bzw. an den Rändern dieser Bahnstücke entstehen und damit lokalisiert sind. Bei ausreichend großen Abständen zwischen diesen lokalisierten Anregungspunkten, nämlich bei Abständen über der Gliedteilungslänge, können diese lokalisierten Anregungspunkte entkoppelt betrachtet werden und nach dem Superpositionsprinzip zusammengesetzt werden.

Ein bevorzugter Ansatz besteht aus genau einem Kreisbogenbahnstück und genau einem geraden Bahnstück, wobei sich das Kreisbogenbahnstück an das gerade Trum anschließt und das gerade Bahnstück zwischen dem Kreisbogenbahnstück und dem Kettenantriebsrad befindet. Es wird auf das Ausführungsbeispiel verwiesen.

Weiterhin zeichnet sich eine bevorzugte Variante der Erfindung dadurch aus, dass die Abstände zwischen den einzelnen Polygonanregungen, insbesondere zwischen den Polygonanregungen entlang einer Kettenübergangsbahn aus Kreisbogenbahnstücken und geraden Bahnstücken, kleiner als die Gliedteilungslänge sind. Dies kann wegen der Gesamtbaugröße der Führungsschiene günstig sein. Wenn dabei eine genaue Rechnung gewünscht ist, sollte das Superpositionsprinzip vorzugsweise nicht Anwendung finden. Dabei ist also die Polygonanregung entlang der gesamten Kettenübergangsbahn insgesamt zu berücksichtigen und nicht in einzelne Anregungspunkte aufzuteilen, weil diese miteinander überlagert sind. Im Rahmen einer Computeroptimierung stellt dieser Aufwand nach der Erfahrung der Erfinder keine besondere Schwierigkeit dar.

Die erwähnte Kombination der beiden grundsätzlich denkbaren Vorgehensweisen bei der Computeroptimierung kann darin liegen, dass über einen festen Ansatz eine dem Ansatz entsprechende optimierte Kettenübergangsbahn bestimmt wird, bei der die Gesamtpolygonanregungen klein sind, jedoch nicht Null entsprechen. Dann kann ein Ausschnitt dieser Bahn einer weiteren Korrektur unterworfen werden, mit der die verbleibenden Polygonanregungen zu Null gebracht werden. Dies kann dadurch erfolgen, dass das zu korrigierende Bahnstück von der bekannten Bahn ausgehend neu konstruiert wird, wobei die Gesamtpolygonanregung von Null als Randbedingung berücksichtigt wird. Dabei bleibt die aus der Optimierung des Ansatzes errechnete Kettenübergangsbahn außerhalb des der Korrektur unterworfenen Bereichs unverändert. Der der Korrektur unterworfene Bereich beträgt vorzugsweise genau eine Kettenteilungslänge. Es wird wiederum auf das Ausführungsbeispiel verwiesen.

Unter Berücksichtigung der dynamischen Eigenschaften der Gliederkette kann auch bestimmt und ggf. vermieden werden, ob bzw. dass die Gliederkette stellenweise von einer nur als Unterstützung vorgegebenen Bahn (auch außerhalb der Kettenübergangsbahn) abhebt, weil die Fliehkräfte zu groß werden. Es ist jedoch bei der Erfindung bevorzugt, dass die Gliederkette jedenfalls im Bereich der Kettenübergangsbahn und dem unmittelbar daran anschließenden Bereich des geraden Trums zweiseitig geführt wird, also schon wegen der Führung nicht abheben kann. Die Gliederkette hat dann also nur einen Freiheitsgrad entlang ihrer regulären Bewegungsrichtung, was hier als longitudinal bezeichnet wird.

Die Herstellung der Führungsschiene selbst, d.h. der die Gliederkette führenden Form, die also die Kettenübergangsbahn definiert, kann vorzugsweise durch eine NC-gesteuerte Maschine erfolgen. Dabei spielt es keine wesentliche Rolle mehr, ob die Form analytisch bekannt ist oder nur numerisch definiert ist und wie kompliziert ggf. der analytische Ausdruck ist. Wenn allerdings mit konventionelleren Bearbeitungstechniken vorgegangen werden soll, bietet der bereits zitierte Ansatz mit Kreisbogenbahnstücken und gerade Bahnstücken besondere Vorteil, weil diese besonders leicht nachgefahren werden können, ohne eine NC-Steuerung zu verwenden.

Wie groß die verbleibenden Polygonanregungen sein dürfen, ist stark vom Anwendungsfall abhängig. Dabei ist auch zu berücksichtigen, wie genau bei der Herstellung gearbeitet werden kann, weil sich auch durch Bearbeitungstoleranzen Anregungen ergeben und eine Korrektur unter das somit toleranzbedingte Niveau keinen Sinn hat. Die Erfindung geht davon aus, dass bei einer Definition der Polygonanregungen als relative longitudinale Geschwindigkeitsabweichungen (in Bezug auf die mittlere Geschwindigkeit) Werte von 2% und darunter anzustreben sind. Bevorzugt sind eine Obergrenze von 1,5% und 1%. Umso geringer die Polygonanregungen sind, umso genauer kann die Bewegung entlang der Transportstrecke gesteuert werden, auch wenn es sich nicht um eine gleichförmige Bewegung handelt. Auch sind dadurch besonders hohe Laufgeschwindigkeiten möglich, wobei gleichzeitig die mechanischen Belastungen der Bandtransportanlage und die erzeugten Schwingungen sowie die Geräuschentwicklung begrenzt bleiben.

Die vorzugsweise angestrebten maximalen Polygonanregungen können auch über die Lageabweichungen in Transportrichtung definiert werden. Sie sollten vorzugsweise nicht größer als 0,3, besser nicht größer als 0,2 und besonders bevorzugterweise nicht größer als 0,1 mm sein.

Es wurde bereits erwähnt, daß der Polygoneffekt als solcher bei größerer Zähnezahl des Antriebskettenrades schwächer wird, zu große Kettenräder aber unerwünscht sein können. Insoweit könnte die Erfindung Anlaß geben zur Verwendung von Antriebskettenrädem mit besonders kleiner Zähnezahl. Andererseits sollen die letztlich doch auftretenden Polygonanregungen, die ja erfindungsgemäß nur in ihrer Gesamtüberlagerung minimiert werden, nicht zu groß werden, um auch die mechanischen Belastungen in dem Bereich des Übergangs von dem geraden Trum zum Antriebskettenrad bzw. umgekehrt im Rahmen zu halten. Daher sind erfindungsgemäß Zähnezahlen des Antriebskettenrades von zumindest 9 bevorzugt.

Die vorstehende und folgende Beschreibung der Erfindung ist in ihren Einzelheiten sowohl im Hinblick auf das Herstellungsverfahren als auch im Hinblick auf die Bandtransportanlage zu lesen. Die einzelnen Merkmale gelten sowohl als Verfahrensmerkmale als auch als Vorrichtungsmerkmale, wenngleich dies im einzelnen nicht ausdrücklich festgestellt wird.

Im folgenden wird ein Ausführungsbeispiel der Erfindung erläutert. Die dabei offenbarten Merkmale sind auch in anderen als den dargestellten Kombinationen erfindungswesentlich. In den Figuren zeigt:

### Kurzbeschreibung der Figuren

Figur 1 zeigt eine vereinfachte Seitenansicht eines Teils eines Bandes einer Doppelbandanlage mit Kettenantriebsrad, wobei die Blickrichtung der Achsenrichtung des Kettenantriebsrades entspricht;
Figur 2 ist eine Skizze zur Verdeutlichung der Berechnung der Gesamtpolygonanregung entlang einer Kettenübergangsbahn;
Figur 3 ist eine schematische Darstellung der erfindungsgemäßen Kettenübergangsbahn aus Kreisbogenstück und geradem Stück;
Figur 4 verdeutlicht das Grundprinzip der Erfindung unter Voraussetzung des Superpositionsprinzips, indem Polygonanregungen verschiedenen Anregungspunkten zugeordnet werden;
Figur 5 zeigt verschiedene Darstellungen einer Kurve und verdeutlicht zwei Optima bei der erfindungsgemäßen Bahnoptimierung;
Figur 6 illustriert die Polygonanregungen der Bahn gemäß den beiden Optimierungsmöglichkeiten sowie einer konventionellen Lösung;
Figur 7 skizziert schematisch die Konstruktion einer korrigierten Bahn ohne Polygonanregungen;
Figur 8 illustriert die Polygonanregungen bei einer optimierten, jedoch nicht gemäß Figur 7 korrigierten erfindungsgemäßen Bahn sowie diejenigen einer konventionellen Lösung im Vergleich zu der korrigierten Bahn; und
Figur 9 zeigt zwei Korrekturmöglichkeiten.

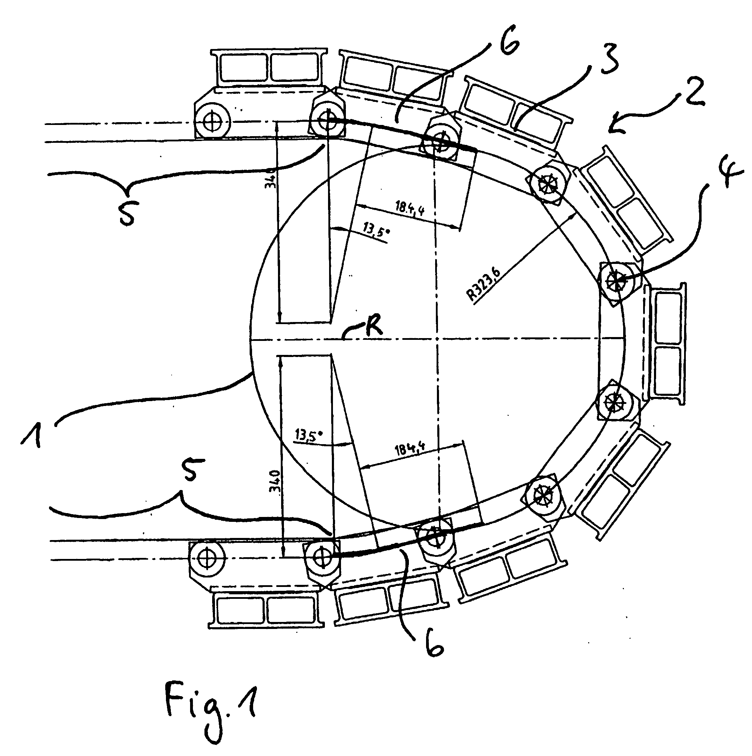

Figur 1 zeigt zur Verdeutlichung der Situation ein Kettenantriebsrad 1 in einer Doppelbandanlage als Ausführungsbeispiel für eine erfindungsgemäße Bandtransportanlage. Um das Kettenantriebsrad 1 ist eine Gliederkette 2 geführt, die aus einzelnen Gliedern 3 besteht, die an Gelenken 4 miteinander verbunden sind. Das Kettenantriebsrad 1 ist ein konventionelles Zahnrad mit zehn Zähnen, die nicht mehr eigens dargestellt sind. Das Kettenantriebsrad 1 ist vielmehr als einfacher Kreis gezeichnet, wobei der Kreis im Bereich des von der Gliederkette 2 erfaßten Teilkreises für die Bahn der den Achsen der Gelenke 4 entsprechenden Punkte (in der zweidimensionalen Darstellung) steht. Dieser Kreis hat einen im folgenden mit R bezeichneten Radius von 323,6 mm.

Bei der Gliederkette 2 handelt es sich um eine konventionelle Gliederkette einer Doppelbandanlage. Die nach außen gewandten Oberflächen der einzelnen Glieder in dem oben und unten jeweils mit 5 bezeichneten Bereich des geraden Trums der Gliederkette 2 sind im wesentlichen nahtlos aneinander gefügt und bilden damit eine Preßfläche. Das der Transportstrecke der Doppelbandanlage zugewandte gerade Trum bildet damit eine Begrenzungsfläche für den Produktdurchlaufkanal der Doppelbandanlage. Wenn es sich bei dem in Figur 1 dargestellten Gliederkettenband 2 beispielsweise um das obere Band einer Doppelbandanlage handelt, so gilt dies für das untere gerade Trum. Eine entsprechende Konstruktion ist dann ein zweites Mal als unteres Band vorgesehen, wobei das obere Trum dem Produktdurchlaufkanat zugewandt ist.

Figur 1 ist bemaßt, um die Dimensionen einer günstigen Lösung für ein zehnzähniges Kettenantriebsrad 1 und eine Teilung a von 200 mm (= Abstand der Gelenke 4) zu verdeutlichen. Die Kettenübergangsbahnen sind jeweils mit 6 bezeichnet und schließen an das gerade Trum 5 direkt an. Die Kettenübergangsbahnen 6 sind dabei zur Verdeutlichung fett dargestellt. Zwischen der oberen und der unteren Kettenübergangsbahn 6 liegt dann der von der Gliederkette 2 erfaßte Teilkreis des Kettenantriebsrades 1. Die Kettenübergangsbahnen 6 bestehen jeweils aus einem an das gerade Trum 5 anschließenden Kreisbogenstück mit einem Radius von 340 mm und einem Winkel von etwa 13,5° und einem daran anschließenden geraden Bahnstück von 184,4 mm Länge. Im folgenden wird nur noch die untere Kettenübergangsbahn 6 betrachtet, wobei die jeweiligen Aussagen spiegelsymmetrisch auch für die obere Kettenübergangsbahn gelten. Im übrigen sind die Kettenübergangsbahnen durch entsprechende Führungsschienen nicht nur an den dargestellten beiden Seiten des oberen Kettenantriebsrades in der Doppelbandanlage vorgesehen, sondern auch an den beiden Seiten des lage vorgesehen, sondern auch an den beiden Seiten des Kettenspannrades an dem entgegengesetzten Ende der Gliederkette 2 sowie in gleicher Weise auch bei dem unteren Gliederkettenband, so daß die gesamte Doppelbandanlage insgesamt über acht erfindungsgemäße Führungsschienen verfügt.

In Figur 1 kann man bereits erkennen, dass die fett eingezeichnete Kettenübergangsbahn 6 der Bewegungsbahn der Achsen der Gelenke 4, also der Rollenmittelpunkte der Gliederkette, entspricht. Realisiert wird diese Kettenübergangsbahn 6 dadurch, dass die Rollen der Gliederkette auf einer eine Lauffläche für die Rollen bildenden Führungsschiene abrollen, die um den Rollenradius nach innen versetzt ist. Sie besteht also aus einem ebenfalls 184,4 mm langen geraden Schienenstück und einem sich zum geraden Trum hin daran anschließenden kreisbogenförmigen Schienenstück mit einem Winkel von etwa 13,5°, jedoch einem Radius von nur 309 mm (bei 62 mm Rollendurchmesser). Im übrigen geht die Schiene hinter dem kreisbogenförmigen Stück gerade in die im übrigen konventionelle Führung der Gliederkette im Bereich des geraden Trums über. An der dem Antriebskettenrad 1 zugewandten Seite geht die Führungsschiene etwas über das bereits erwähnte gerade Stück von 184,4 mm Länge hinaus und ist dabei (mit einem Radius von 245 mm) nach innen abgerundet. Dieser zusätzliche Abschnitt dient dazu, das Aufsetzen der Rollen, wenn sie vom Kettenantriebsrad auf die Schiene auflaufen, unter Berücksichtigung von nicht zu vermeidenden kleinen Fertigungstoleranzen nicht zu schlagartig zu gestalten.

Natürlich könnte die Kettenübergangsbahn 6 auch durch eine andere Führung bewirkt werden. Dem Fachmann sind die verschiedenen Möglichkeiten zur Realisierung einer Führung von Gliederketten offensichtlich. Im folgenden geht es lediglich um die angestrebte Kettenübergangsbahn 6 der Rollenachsen 4.

Durch die in Figur 1 oben dargestellte Kettenübergangsbahn 6 wird bewirkt, daß eine gleichförmige Drehung des Kettenantriebsrades 1 im wesentlichen zu einer gleichförmigen Bewegung des oberen geraden Trums 5 führt bzw. daß die Beziehung zwischen den Bewegungen fast linear ist. Das gleiche gilt wegen der unteren Kettenübergangsbahn 6 für die Beziehung zwischen der Bewegung des Kettenantriebsrades 1 und der des unteren geraden Trums 5. Durch die an dem nicht dargestellten Kettenspannrad vorgesehenen Kettenübergangsbahnen stehen wiederum die Trumbewegungen in linearer Beziehung zu der Bewegung des Kettenspannrades, was insgesamt zu einer weitgehenden Linearisierung der Bewegungsbeziehungen zwischen allen bewegten Massen dieses Bandes führt. Gleiches gilt für das untere Band.

Insgesamt kann damit nicht nur erreicht werden, daß der Bandtransport ohne besondere Steuerung des Antriebs des Kettenantriebsrades 1 gleichmäßig erfolgt. Vielmehr werden die durch den Polygoneffekt sonst erzeugten Schwingungen auf ein Minimum reduziert, so daß sich die gesamte doppelte Bandanlage mit einer erheblich höheren Geschwindigkeit betreiben läßt. Im vorliegenden Fall konnte die Geschwindigkeit um einen Faktor 4 auf 60 m/min. gesteigert werden, wobei ein ruhiger und stoßfreier Lauf gegeben ist. Der Polygoneffekt konnte dabei auf einen Wert von etwa 0,4% im Sinne einer relativen Geschwindigkeitsschwankung verringert werden, wobei ohne die Erfindung, also bei direktem Anschluß des geraden Trums 5 an den Teilkreis auf dem Kettenantriebsrad 1 ein Wert von etwa 1,7% vorlag. Die Lageabweichungen in Folge des Polygoneffekts lagen bei etwa 0,032 mm (Amplitude der Abweichung vom Sollwert). Zu den Zahlenwerten wird auf die im Folgenden noch beschriebene Figur 6 verwiesen.

Im folgenden wird näher erläutert, wie die dargestellte Form bestimmt werden konnte. Diese Schilderung ist aus Gründen der Verständlichkeit und der Kürze qualitativ gehalten. Der Fachmann wird das Problem (bei anderen Parametern) anhand dieser Schilderung ohne weiteres lösen können. Im übrigen spielen die Einzelheiten der mathematischen Darstellung bzw. des verwendeten Computerprogramms sowie des Optimierungsalgorithmus keine entscheidende Rolle.

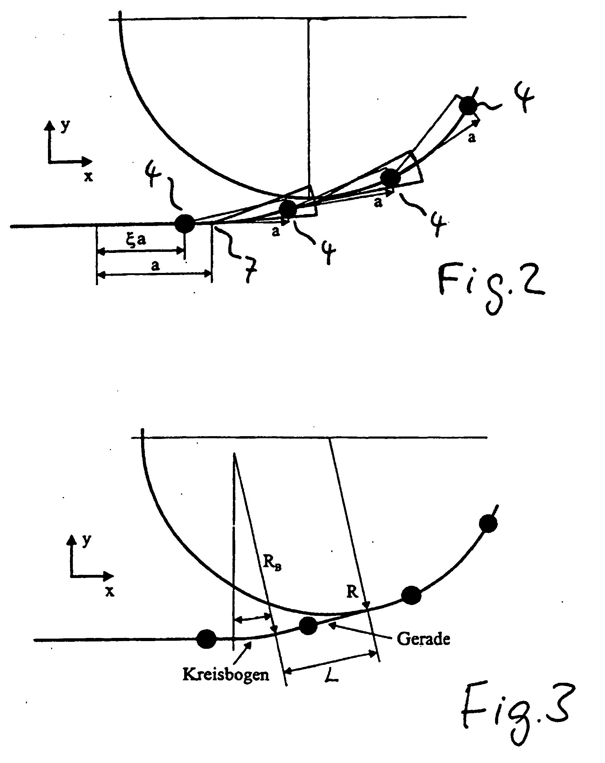

In einem ersten Schritt wird gemäß Figur 2 zunächst die Gesamtpolygonanregung bestimmt. Dazu definiert man sich eine in der Figur links unten eingezeichnete Strecke der Gliedteilungslänge a, die noch im Bereich des geraden Trums 5 liegt. An das gerade Trum 5 schließt ein noch von variablen Parametern abhängiges Kreisbogenstück mit Radius R_{B} und einer Sekantenlänge B an; der Winkel des Kreisbogenstücks beträgt also arc sin B/R_{B}. An dieses Kreisbogenbahnstück schließt sich ein gerades Bahnstück der Länge L an, das in den Teilkreis übergeht. Als Randbedingungen werden festgelegt, daß die Übergänge von dem geraden Trum 5 in das Kreisbogenbahnstück und von dem Kreisbogenbahnstück in das Bahnstück L sowie von dem Bahnstück L in den Teilkreis auf dem Kettenantriebsrad 1 stetig und stetig differenzierbar sein sollen. Die Bahn ist in anderen Worten insgesamt geschlossen und knickfrei.

Es wird nun ein in Figur 2 als kräftiger runder Punkt eingezeichneter Gelenkpunkt 4 im Bereich des letzten geraden Trumstücks mit der Länge a angenommen, wobei die Lage dieses Gelenkpunkts 4 über eine Laufvariable ξ in der in der Figur 2 angegebenen Weise gegeben ist. Von diesem Punkt ausgehend kann mit der Länge a gewissermaßen als Zirkelschlag der nächste Schnittpunkt mit der angesetzten Bahn berechnet werden, der der Lage des nächsten Gelenkpunktes 4 auf der noch unbestimmten Bahn entspricht. Von diesem Punkt ausgehend wiederholt man diesen Vorgang, bis man mit einem konstruierten Gelenkpunkt 4 auf dem Teilkreis angekommen ist, wobei man im Rahmen einer Fallunterscheidung bestimmte Längenbereiche der Kettenübergangsbahn unterscheiden kann. In Figur 2 ist dies für die Gelenkpunkte 4 und zusätzlich auch von einem Punkt 7 am Ende des Bereichs der Länge a im geraden Trum ausgehend angedeutet.

Die durch den Parameter ξ (zwischen 0 und 1) symbolisierte Bewegung des in Figur 2 links eingezeichneten Gelenkpunktes 4 entspricht für den Teilkreis, d.h. für einen nach der obenstehenden Konstruktion für alle ξ auf dem Teilkreis liegenden Gelenkpunkt, einer Bewegung innerhalb eines Winkelbereichs 2π/Z (Z: Zähnezahl), wobei der Winkelbereich einer Sekantenlänge (nicht Bogenlänge) der Länge a entspricht. Innerhalb dieses Winkelbereichs läuft der Gelenkpunkt 4 auf dem Teilkreis, wenn der Gelenkpunkt 4 auf dem geraden Trum innerhalb der Strecke der Länge a läuft. Die Differenz zwischen beiden Bewegungen spiegelt den Polygoneffekt wieder. Anders ausgedrückt: Wenn man die Bewegung des Gelenkpunktes auf dem Teilkreis durch einen von 0 bis 1 laufenden winkelproportionalen Parameter symbolisiert, so steht dessen Differenz ξ bzw. umgekehrt für den Polygoneffekt.

Diese Abhängigkeit ist in der obenstehenden Weise analytisch oder als Rechner-Modell konstruierbar und kann dann mit üblichen Optimierungsalgorithmen so optimiert werden, daß die größte auftretende Wegabweichung des Polygoneffekts minimiert wird. Hierbei ist zu beachten, daß die an sich aus Fachbüchern bekannte Verlaufsform des Polygoneffekts hier wegen der Form der Kettenübergangsbahn nicht auftritt. Es kann im übrigen auch ein anderes Bewertungskriterium als eine Minimierung des maximalen Polygoneffekts im Sinne der Wegabweichung angewendet werden, etwa bezogen auf die Beschleunigungen oder bezogen auf Mittelwerte der Abweichungen. Es könnten auch dynamische Anregungen in bestimmten kritischen Frequenzbereichen minimiert werden (Anlagenresonanzen).

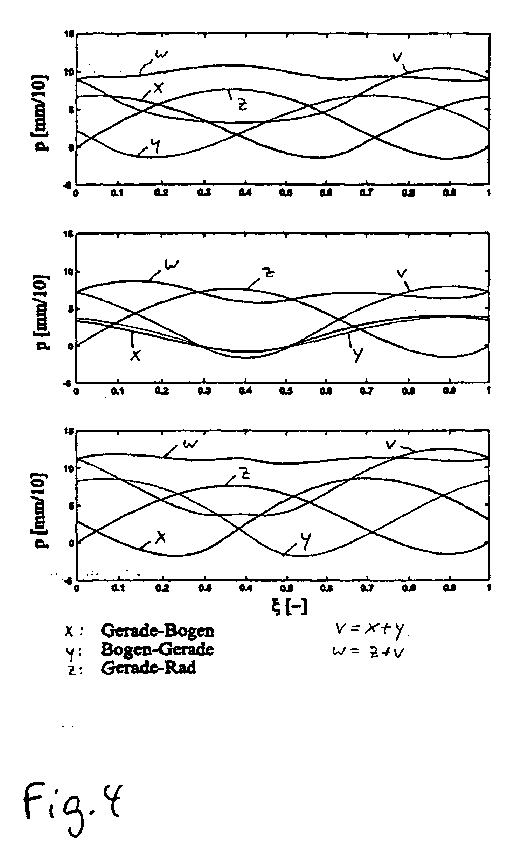

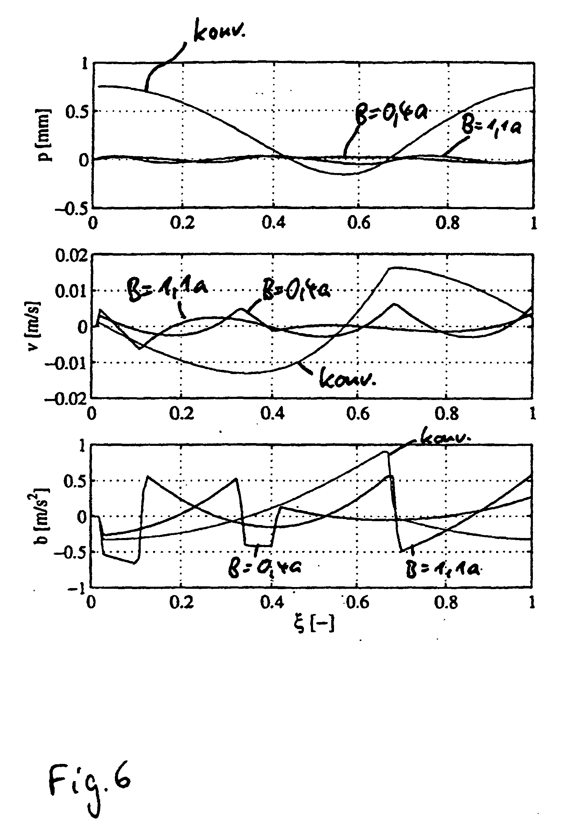

Im vorliegenden Fall ist in dieser Weise die in Figur 3 dargestellte Form der Kettenübergangsbahn wie folgt optimiert worden: Bei Z=10 und a=200 mm beträgt das erfindungsgemäße Optimum für R_{B} 1,7a (340 mm), die Sekantenlänge B 0,4a (80 mm) (entspricht einem Winkel von etwa 13,5°) und die Länge L beträgt 0,922a (184,4 mm). Dabei skalieren natürlich alle längendimensionsbehafteten Größen (B, L, R_{B}) linear mit der Teilungslänge, die Winkel bleiben bei der Skalierung natürlich unverändert. Daher sollten die Größen der Verallgemeinerbarkeit auch als Vielfache von a geschrieben und aufgefasst werden. Zu beachten ist, dass das hier gewählte Optimum einem im folgenden noch näher erläuterten relativ flachen Minimum entspricht (vgl. Figur 5 und zugehörige Erläuterungen), so dass das Optimum bezüglich Schwankungen relativ tolerant ist, insbesondere wenn die drei Werte konsistent miteinander variiert werden, man also innerhalb des flachen Minimums etwas seitlich wandert.

Bei der beschriebenen Vorgehensweise wurde übrigens nur die kinematische Polygonanregung berücksichtigt und idealisierenderweise angenommen, dass keine Stöße auftreten. Ferner wurden keine Deformationen der Schiene oder der Rollen infolge dynamischer Schwingungen berücksichtigt. Nach den Erfahrungen der Anmelderin bewährt sich diese theoretisch vereinfachende Vorgehensweise, weil sie mit einem beherrschbaren Aufwand zu Ergebnissen führt, die sich in der praktischen Erprobung sehr bewährt haben.

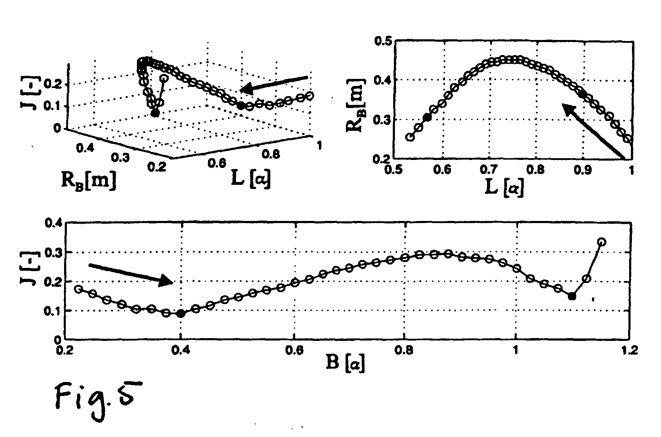

Figur 4 verdeutlicht das Prinzip der Erfindung beispielhaft. In den untereinander liegenden Darstellungen entspricht die vertikale Achse dem Polygoneffekt p und die horizontale Achse der beschriebenen Laufvariablen ξ. Hier wurde unter Annahme des Superpositionsprinzips eine Rechnung vorgenommen, die die einzelnen Polygonanregungen voneinander trennt. Dabei handelt es sich jedoch nur um eine Veranschaulichung, weil das Superpositionsprinzip zumindest bei dem oben dargestellten Ergebnis wegen der zu kurzen Länge des Kreisbogenstücks nicht gilt.

Hier stellt x die Polygonanregung im Übergang vom geraden Trum 5 auf das Kreisbogenstück dar, y die Polygonanregung zwischen dem Kreisbogenstück und dem geraden Kettenübergangsbahnstück und z die Polygonanregung am Übergang des geraden Kettenübergangsbahnstücks zum Teilkreis. v bezeichnet die Überlagerung von x und y und w die Gesamtsuperposition. Man kann erkennen, daß sich aus den jeweils relativ stark oszillierenden Kurven x, y und z durch Superposition eine relativ glatt verlaufende Gesamtanregung w erzielen läßt. Dies ist im dritten dargestellten Fall beispielsweise viel besser als im zweiten dargestellten Fall, weil sie noch viel glatter verläuft und geringere Ausschläge zeigt.

Intuitiv betrachtet, kann man in Figur 4 erkennen, daß es beispielsweise nicht ausreicht, zwei Anregungen an dem Kreisbogenstück mit halber Amplitude mit der Anregung am Teilkreis des Kettenantriebsrades (z) zu kompensieren, wie dies in der Mitte dargestellt ist. Dort ist die Gesamtkurve w noch relativ wellig. Beim intuitiven Vorgehen muß vielmehr aus den beiden Anregungen x und y eine spiegelverkehrte Anregung bezüglich der Anregung z erzeugt werden, die auf eine möglichst glatte Gesamtsuperposition abgestellt ist, wie es im oberen und im unteren Bild dargestellt ist.

Die Mittelwerte der betrachteten Kurven sind übrigens ohne Bedeutung und willkürlich gesetzt. Ein Achsenabschnitt der Kurve w bedeutet lediglich ein konstantes Zahlenverhältnis zwischen Kettenantriebsradbewegung und Bewegung des geraden Trums.

Die beiden Fälle in Figur 4 ganz unten und ganz oben entsprechen übrigens im wesentlichen den im folgenden näher dargestellten beiden Minima der Polygonanregung bei der Optimierung. Es wird jedoch wiederholt, daß Figur 4 unter Annahme des Superpositionsprinzips erstellt wurde, das für keines der beiden Minima wirklich gilt.

Figur 5 zeigt nun die Ergebnisse der zuvor qualitativ beschriebene (Figur 2) Berechnung der Gesamtpolygonanregung in drei Darstellungen. Die dabei verwendete Variable J steht als dimensionslose Amplitude der Polygonanregung für das Verhältnis der berechneten Amplitude zu einer Amplitude bei einer Konstruktion mit gerader Schiene und gleichem Bauraum, also höherer Zähnezahl des Rades. Dies ist deswegen ein technisch sinnvolles Kriterium, weil die Führungsschienen den Bauraum senkrecht zur Richtung des geraden Trums erhöhen und damit sinnvollerweise nicht mit einer Situation ohne Führungsschiene bei gleicher Zähnezahl verglichen werden sollten. Die bereits bekannten Größen der Länge L des geraden Übergangsbahnstücks und der Länge B des Sekantenstücks der Kettenübergangsbahn sind in Einheiten der Kettenteilung, also als Vielfache von a, dargestellt.

Die Pfeile in den Darstellungen verdeutlichen die Zusammengehörigkeit der verschiedenen gerechneten Stützstellen. Der in der unteren Darstellung J (B) links liegende Punkt entspricht also den jeweils rechten Punkten in den beiden oberen Darstellungen und die oben am anderen Ende der Graphen liegenden Punkte entsprechen in dem unteren Graphen dem rechts eingezeichneten Punkt. Von Interesse sind natürlich die beiden ausgefüllt gezeichneten Minima bei einerseits B=0,4a und L=0,922a sowie R_{B}=1,7a und andererseits bei B=1,1a und L=0,567a sowie R_{B}=1,525a. Zu beachten ist, daß die Kettenübergangsbahn bei beiden Minima insgesamt länger als die Gliedteilungslänge a ist.

Folgende Gründe sprechen für das Minimum bei B = 0,4a und wären bei anderen Optimierungen analog anwendbar, sofern mehrere Minima auftreten:
- Die Kettenübergangsbahn ist insgesamt kürzer, was grundsätzlich wegen der Baugröße erwünscht ist und zudem wegen der geringeren Zahl von normalkraftbehafteten Gelenken bzw. Gelenkbolzen im Bereich der Führungsschiene auch die Fehlerempfindlichkeit verringert.
- Die Bahn ist bei den hier angenommenen Ausgangsparametern 56 mm niedriger (d.h. kleiner senkrecht zur Richtung des geraden Trums) als bei dem anderen Minimum.
- Der Einlaufwinkel, d.h. der Winkel, um den der von der Gliederkette erfaßte Teilkreis an dem Kettenantriebsrad wegen einer Kettenübergangsbahn kleiner ist als bei der konventionellen Lösung, beträgt nur etwa 13,5°, so daß viele Gelenkpunkte bzw. Gelenkbolzen im Eingriff mit dem Kettenantriebsrad liegen.
- Die Polygonanregung ist, wie insbesondere die untere Kurve in Figur 5 zeigt, etwas niedriger als bei dem anderen Minimum. Wegen des fest vorgegebenen Ansatzes liegt sie natürlich nicht bei 0.
- Das Minimum ist flacher und damit weniger fehlerempfindlich als das andere Minimum.
- Berechnungen zeigen, daß kleinere Knickwinkel zwischen den Kettengliedern auftreten. Damit sinken die Normalkräfte bezüglich der Führungsschiene und außerdem der Verschleiß der Gelenke.

Beide Minima zeigen übrigens eine Länge L des geraden Kettenübergangsbahnstücks von weniger als a. Bei dem bevorzugten Minimum gilt dies außerdem auch für die Länge des Kreisbogenstücks. Die Polygonanregungen überlagern also miteinander, so daß eine genaue Rechnung nicht unter Annahme des Superpositionsprinzips hätte erfolgen dürfen. Das kann jedoch bei anderen Ansätzen und anderen Minima anders sein.

Figur 6 zeigt eine quantitative Berechnung des Nutzeffekts der erfindungsgemäßen Optimierung. Unter Annahme der bisherigen quantitativen Parameter und außerdem einer Gliederkettengeschwindigkeit im geraden Trum von 60 m/min., die mit konventioneller Vorgehensweise nicht realisierbar war, ergeben sich die in Figur 6 dargestellten quantitativen Werte für die Polygonanregung in mm und die zugehörigen Geschwindigkeiten v und Beschleunigungen b. Die Achsenabschnitte der Polygonauslenkung p sind willkürlich, es interessieren nur die Abweichungen der Kurven von der Horizontalen. Die mit "konv." bezeichnete Kurve steht für ein konventionelles Vorgehen ohne Führungsschiene, also mit direktem Übergang zwischen geradem Trum und Kettenantriebsrad. Die anderen beiden Kurven symbolisieren die eben beschriebenen Minima der Optimierung. Man erkennt, daß beide Minima gegenüber der konventionellen Vorgehensweise wesentliche Vorteile zeigen. Vor allem sind die Ortsabweichungen viel kleiner als im konventionellen Fall, weil die Störungen höherfrequent sind. Auch die Geschwindigkeitsabweichungen sind noch erheblich geringer als im konventionellen Fall. Bei den Beschleunigungen ist der Unterschied nicht mehr ganz so groß, jedoch noch deutlich erkennbar.

Zur Erläuterung ist noch hinzuzufügen, daß sowohl die Ortsabweichungen als auch die Beschleunigungen von Interesse sind. Die Ortsabweichungen stehen für eine mangelnde Präzision der Transportbewegung. Dies kann aus verschiedenen Gründen störend sein, z.B. weil der aus der Doppelbandanlage austretende Produktstrang mit einer Diagonalsäge zersägt werden soll. Abweichungen von einer gleichförmigen translatorischen Bewegung verschlechtern die Qualität des Sägeschnitts, weil die Säge an die mittlere translatorische Geschwindigkeit des Produktstranges angepaßt mitläuft, jedoch Schwankungen nicht auffangen kann. Damit gibt das obere Diagramm in Figur 6 einen unmittelbaren Eindruck von der Verbesserung der Sägeleistung (Genauigkeit, Schnittqualität und Werkzeugstandzeit) und damit von einem Vorteil der Erfindung, der von der Erhöhung der Transportgeschwindigkeit völlig unabhängig ist.

Auch die Beschleunigungen sind von Interesse, weil sie mit den dynamischen Kräften in der Anlage korrelieren und damit technische Grenzen für die Betriebsgeschwindigkeit vorgeben. Man erkennt, daß das erfindungsgemäße Vorgehen hier einen spürbaren Fortschritt bietet, wenngleich durch den fest vorgegebenen Ansatz die Polygoneffekte nicht vollständig entfernt werden konnten. Der Anmelderin war es jedoch möglich, durch das erfindungsgemäße Vorgehen die Betriebsgeschwindigkeit der Doppelbandanlage um einen Faktor 3 zu erhöhen.

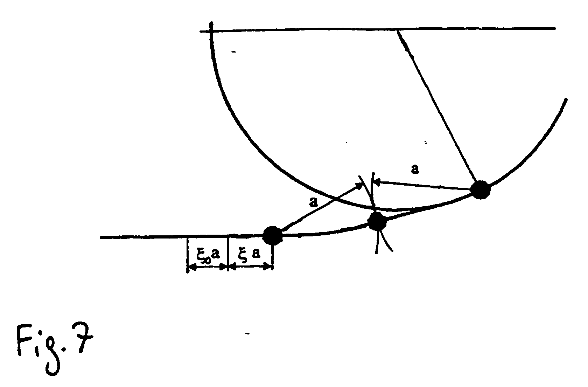

Es ist eine Frage der Anforderungen der geplanten Anwendung und der realisierbaren Fertigungsgenauigkeit, ob man mit dem beschriebenen Ergebnis zufrieden sein kann. Im folgenden wird anhand Figur 7 erläutert, wie sich unter Beibehaltung der grundsätzlichen Vorteile der beschriebenen Lösung eine weitere Verbesserung erzielen läßt. Dieser Gedankengang ist im Prinzip auch auf andere Ansätze übertragbar.

Man geht aus von einer optimierten Lösung bei fest vorgegebenem Ansatz, die also noch Restpolygonanregungen aufweist. Diese Lösung ist als Bahn bekannt. Wegen der bekannten Teilungslänge kennt man damit auch die Positionsbeziehung zwischen einem Gelenkpunkt im Bereich des geraden Trums und einem Gelenkpunkt auf dem von der Gliederkette erfaßten Teil des Kettenantriebsrades (Sekantenstreckenzug). Nun wird bei vorgegebener Position zweier Gelenkpunkte ein dazwischenliegender Gelenkpunkt berechnet. Die vorgegebenen beiden Punkte sind also übernächste Nachbarn. Bei der Konstruktion kann dann die Position der vorgegebenen Gelenkpunkte um eine Gliedteilungslänge variiert werden, so daß die Bahn für den dazwischenliegenden Gelenkpunkt im Bereich einer Gliedteilungslänge neu konstruiert wird. Da die Ausgangsbahn bereits recht gut war, erwartet man eine nur geringe Korrektur.

Wenn man nun den auf Seiten des geraden Trums liegenden festen Gelenkpunkt von einer bestimmten Stelle ausgehend, beispielsweise dem Ende des geraden Trums, d.h. im Übertritt zu dem Kreisbogenstück, an eine durch den Parameter ξ₀a gegebene Stelle setzt und von dieser Stelle mit der Laufvariablen ξ noch einmal um den Abstand ξa versetzt, so kann man abhängig von ξ₀ und ξ die Position des übernächsten Gelenkpunktes in Richtung zu dem Kettenantriebsrad bestimmen, der auf der vorgegebenen Bahn liegen soll. Nun wird der Gelenkpunkt am Kettenantriebsrad so versetzt, daß die bereits bekannte Polygonanregung als Randbedingung auf 0 gebracht wird. Der Punkt am Kettenantriebsrad hat also zwar noch eine Position auf der bekannten Bahn, jedoch nicht mehr den richtigen Abstand zu dem durch ξ₀ und ξ vorgegebenen Punkt. Der Gelenkpunkt zwischen beiden läßt sich nun einfach durch eine Zirkelkonstruktion bestimmen, da er ja von beiden Gelenkpunkten jeweils einen Abstand a einhalten muß. Dann ergeben sich durch die Zirkelkonstruktion zwei Schnittpunkte, von denen der äußere gewählt wird, damit die Knickwinkel in den Gelenken immer das gleiche Vorzeichen haben. Damit wird die Bahn sozusagen frei von Mäandern. Ferner kann der Punkt am Kettenantriebsrad in zwei Richtungen verschoben werden, so dass sich zwei Lösungen (innerhalb und außerhalb der alten Bahn) ergeben.

Die beschriebene Konstruktion läßt sich nun für ξ zwischen 0 und 1 wiederholen, so daß für den neu konstruierten dazwischenliegenden Gelenkpunkt eine neue Bahn berechnet worden ist. Der bereits erwähnte "Offsetparameter" ξ₀, d.h. die Ausgangsbasis auf Seiten des geraden Trums, kann nun so angepaßt werden, daß die neu konstruierte Bahn stetig und stetig differenzierbar ist. Bei der vorliegenden Optimierung ergeben sich dabei zwei Lösungen. Bei Kettenübergangsbahnen, die kürzer sind als 2a, muß sich eine solche Lösung jedoch nicht notwendigerweise ergeben. Ggf. muß eine längere Kettenübergangsbahn als Ausgangsbasis verwendet werden.

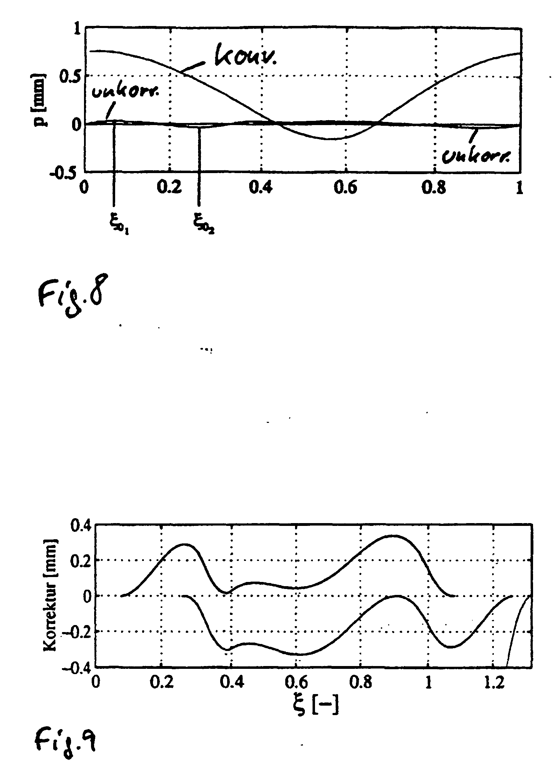

Figur 8 zeigt im Vergleich die Polygonanregung p einer konventionellen Lösung ganz ohne Führungsschiene, die bereits erläuterte optimierte, jedoch noch nicht korrigierte ("unkorr.") Lösung mit B = 0,4 a sowie als horizontale Linie bei p = 0 die korrigierte Lösung. Außerdem sind zwei Werte ξ₀₁ und ξ₀₂ eingezeichnet, die jeweils für eine der bereits erwähnten Lösungen die Bedingung des stetig differenzierbaren Anschlusses des korrigierten Bahnstücks mit Länge a an die Restbahn erfüllen.

Figur 9 zeigt die Korrekturkurven für die beiden Werte ξ₀₁ und ξ₀₂ aus Figur 8. Die ganz rechts unten eingezeichnete Linie in Figur 9 zeigt dabei den von dem Antriebskettenrad eingenommenen Raum. Ein Schnitt der Korrekturkurven mit dieser Linie wäre also nicht tolerabel. Man erkennt, daß sich die eine der beiden Möglichkeiten auf positive Korrekturwerte beschränkt, während sich die andere auf negative Korrekturwerte beschränkt. Die Vorzeichen ergeben sich aus dem eingezeichneten Bereich des Kettenantriebsrades; bei negativen Vorzeichen rückt die Kettenübergangsbahn also auf das Kettenantriebsrad zu.

Man erkennt weiterhin, daß die Korrekturen im Bereich einiger Zehntel Millimeter liegen, also bei präziser Bearbeitung durchaus realisierbar sind. In vielen Fällen werden aber andere Effekte dazu führen, daß die Polygonanregung der optimierten, jedoch noch nicht korrigierten Bahn tragbar ist. Insbesondere konnte die Anmelderin die Geschwindigkeitssteigerung auch ohne die in Figur 9 dargestellte Korrektur erzielen. Die Figuren 8 und 9 zeigen jedoch, daß der gewählte Ansatz für eine völlig polygonanregungsfreie Lösung trotz seiner vergleichsweise geringen Länge im Prinzip geeignet ist.

Insgesamt bietet also die erfindungsgemäße Vorgehensweise einen Weg zu einer drastischen Verringerung und bei Bedarf grundsätzlichen Vermeidung von Polygonanregungen bei Gliederketten in Bandtransportanlagen. Die beispielhafte Verwendung eines Ansatzes aus einem Kreisbogenbahnstück und einem geraden Bahnstück hat zu einem günstigen Resultat geführt, wenngleich qualitativ ähnliche Resultate auch mit mathematisch anderen Ansätzen oder ausschließlich numerisch definierten Ansätzen möglich sind. Der entscheidende Grundgedanke liegt darin, Polygonanregungen als solche zuzulassen, jedoch in ihrer Gesamtheit zu minimieren. Im übrigen lassen sich auch Polygonanregungen bei anderen Anlagen mit nahezu vollständig geführten Trumen durch die Erfindung vermeiden.

Die bevorzugte Kettenübergangsbahnform aus Kreisbogenstück und geradem Stück ist im übrigen auch nach Anwendung der Korrektur noch im wesentlichen erhalten, weil die Korrektur vergleichsweise kleine Änderungen mit sich bringt.

## Patentansprüche

1. Verfahren zum Herstellen einer Bandtransportanlage zum Transport von Material entlang einer Transportstrecke,
bei welcher Bandtransportanlage eine Gliederkette (2) mit über Gelenke (4) verbundenen Gliedern (3) über ein Antriebskettenrad (1) geführt ist und ein gerades oder konstant gekrümmtes Trum (5) im Bereich der Transportstrecke aufweist,
bei welchem Verfahren die Gliederkette (2) über das Antriebskettenrad (1) geführt wird und eine Führungsschiene zum Führen der Gliederkette (2) zwischen dem Antriebskettenrad (1) und dem Trum (5) entlang einer Kettenübergangsbahn (6) angebracht wird,
die Führungsschiene so ausgelegt wird, dass die Gliederkette (2) bei dem Übergang zwischen dem Trum (5) und dem Antriebskettenrad (1) entlang der Übergangskettenbahn (6) Polygonanregungen längs der Gliederkette (2) erfährt, die sich insgesamt weitgehend kompensieren,
und für die Form der Führungsschiene ein Ansatz verwendet wird, der zwischen dem Übertritt zwischen dem geraden Trum (5) und der Kettenübergangsbahn (6) einerseits und dem Übertritt zwischen der Kettenübergangsbahn (6) und dem Antriebskettenrad (1) andererseits zumindest eine weitere Stelle aufweist, die zu Polygonanregungen führt,
**dadurch gekennzeichnet, dass** der Ansatz ein an das Trum (5) anschließendes Kreisbogenbahnstück und ein weiteres gerades Bahnstück enthält.

2. Verfahren nach Anspruch 1, bei dem die Kettenübergangsbahn (6) der Gliederkette (2) durch ein Computeroptimierungsverfahren errechnet wird, bei dem die Gesamtpolygonanregung der Gliederkette (2) minimiert wird.

3. Verfahren nach einem der vorstehenden Ansprüche, bei dem die Kettenübergangsbahn (6) länger als die Gliedteilungslänge (a) der Gliederkette (2) ist.

4. Verfahren nach einem der vorstehenden Ansprüche, bei dem für die Form der Führungsschiene ein Ansatz mit mindestens drei Variablen (R_{B}, B, L) verwendet wird.

5. Verfahren nach einem der vorstehenden Ansprüche, bei dem der Ansatz ausschließlich Kreisbogenbahnstücke und gerade Bahnstücke enthält.

6. Verfahren nach Anspruch 5, bei dem der Ansatz genau ein Kreisbogenbahnstück und genau ein gerades Bahnstück enthält.

7. Verfahren nach einem der vorstehenden Ansprüche, bei dem die Berechnung der Gesamtpolygonanregungen bei der Optimierung die gegenseitige Überlagerung einzelner Polygonanregungen in der Kettenübergangsbahn (6) berücksichtigt.

8. Verfahren nach einem der vorstehenden Ansprüche, zumindest Anspruch 3, bei dem nach der Minimierung der Gesamtpolygonanregungen durch Optimieren des Ansatzes eine Korrektur der so ermittelten Kettenübergangsbahn (6) erfolgt, bei der diese entlang einer Kettenteilungslänge (a) korrigiert wird und außerhalb dieser Kettenteilungslänge (a) unverändert bleibt.

9. Verfahren nach einem der vorstehenden Ansprüche, bei dem die Gliederkette (2) in der Kettenübergangsbahn (6) und in dem daran anschließenden Bereich des Trums (5) so geführt ist, dass sie im wesentlichen nur einen longitudinalen Freiheitsgrad hat.

10. Verfahren nach einem der vorstehenden Ansprüche, bei dem die die Gliederkette (2) führende Form der Führungsschiene durch eine NC-gesteuerte Maschine hergestellt wird.

11. Bandtransportanlage zum Transport von Material entlang einer Transportstrecke.
mit einem Antriebskettenrad (1) und einer über das Antriebskettenrad (1) geführten Gliederkette (2) mit über Gelenke (4) verbundenen Gliedern (3) und einem geraden oder konstant gekrümmten Trum (5) im Bereich der Transportstrecke,
und mit einer Führungsschiene zum Führen der Gliederkette (2) zwischen dem Antriebskettenrad (1) und dem Trum (5) entlang einer Kettenübergangsbahn (6),
wobei die Führungsschiene so ausgelegt ist, dass die Gliederkette (2) bei dem Übergang zwischen dem Trum (5) und dem Antriebskettenrad (1) entlang der Übergangskettenbahn (6) Polygonanregungen längs der Gliederkette (2) erfährt, die sich insgesamt weitgehend kompensieren,
und die Kettenübergangsbahn (6) zwischen dem Übertritt zwischen dem Trum (5) und der Kettenübergangsbahn (6) einerseits und dem Übertritt zwischen der Kettenübergangsbahn (6) und dem Antriebskettenrad (1) andererseits zumindest eine weitere Stelle aufweist, die zu Polygonanregungen führt,
**dadurch gekennzeichnet, dass** die Kettenübergangsbahn (6) ein an das Trum (5) anschließendes Kreisbogenbahnstück und ein weiteres gerades Bahnstück enthält.

12. Bandtransportanlage nach Anspruch 11, bei der die Kettenübergangsbahn (6) ausschließlich Kreisbogenbahnstücke und gerade Bahnstücke enthält.

13. Bandtransportanlage nach Anspruch 12, bei der die Kettenübergangsbahn (6) genau ein Kreisbogenbahnstück und genau ein gerades Bahnstück enthält.

14. Bandtransportanlage nach einem der Ansprüche 11-13, bei dem die Zähnezahl des Antriebskettenrades (1) zumindest 9 beträgt.

15. Bandtransportanlage nach einem der Ansprüche 11-14, bei dem die Gliederkette (2) in der Kettenübergangsbahn (6) und in dem daran anschließenden Bereich des Trums so geführt ist, dass sie im wesentlichen nur einen longitudinalen Freiheitsgrad hat.

16. Bandtransportanlage nach einem der Ansprüche 11-15, bei der beidseits des Kettenantriebsrades (1) jeweils eine Führungsschiene und ein sich daran anschließendes Trum (5) vorgesehen sind.

17. Bandtransportanlage nach Anspruch 16, bei der an einem dem Kettenantriebsrad (1) entgegengesetzten Ende der Gliederkette (2) ein weiteres Kettenrad vorgesehen ist und beidseits dieses weiteren Kettenrades jeweils eine Führungsschiene vorgesehen ist und sich zwischen diesen Führungsschienen und den beidseits des Kettenantriebsrades vorgesehenen Führungsschienen zwei gerade Trume (5) der Gliederkette (2) erstrecken.

18. Bandtransportanlage nach einem der Ansprüche 11-17, die als Bandpreßanlage ausgestaltet und mit zwei Gliederketten (2) versehen ist, wobei zumindest eine Führungsschiene pro Gliederkette (2) vorgesehen ist.

19. Bandtransportanlage nach einem der Ansprüche 11 - 18, bei der die Kettenübergangsbahn (6) länger als die Gliedteilungslänge (a) der Gliederkette (2) ist.

## Claims

1. A method of producing a belt conveyor for conveying material along a conveying path,
in which belt conveyor a link chain (2) having chain elements (3) linked via articulations (4) is guided over a driving chain wheel (1) and comprises a straight or regularly curved run (5) in the region of said conveying path,
in which method said link chain (2) is guided over said driving chain wheel (1) and a guiding rail for guiding said link chain (2) between said driving chain wheel (1) and said run (5) along a chain transition track (6) is mounted,
said guiding rail is constructed such that said link chain (2) experiences polygonal excitations along said link chain (2) in said transition between said run (5) and said driving chain wheel (1) along said transition chain track (6), which polygonal excitations substantially compensate in total,
and an approach is used for the form of said guiding rail that comprises at least one additional location resulting in polygonal excitations, between said transition between said straight run (5) and said chain transition rail (6) on the one hand and said transition between said chain transition rail (6) and said driving chain wheel (1) on the other hand,
**characterised in that** said approach comprises a circular arc track portion adjacent to said run (5) and a further straight track portion.

2. The method according to claim 1 in which said chain transition track (6) of said link chain (2) is calculated by means of a computer optimisation method in which the total polygonal excitation of said link chain (2) is minimised.

3. The method according to one of the preceding claims in which said chain transition track (6) is longer than the chain element length (a) of said link chain (2).

4. The method according to one of the preceding claims in which an approach having at least three variables (R_{B}, B, L) is used for said form of said guiding rail.

5. The method according to one of the preceding claims in which said approach consists exclusively of circular arc track portions and straight track portions.

6. The method according to claim 5 in which said approach consists of exactly one circular arc track portion and exactly one straight track portion.

7. The method according to one of the preceding claims in which the calculation of the total polygonal excitations in said optimisation takes into regard the mutual superpositions of single polygonal excitations within said chain transition track (6).

8. The method according to one of the preceding claims, at least claim 3, in which after the minimisation of the total polygonal excitations by optimisation of said approach the thus calculated chain transition track (6) is corrected by a correction along one chain element length (a) and by remaining constant beyond said chain element length (a).

9. The method according to one of the preceding claims in which said link chain (2) is guided in said chain transition track (6) and in the adjacent portion of said run (5) such that it has essentially only a longitudinal degree of freedom.

10. The method according to one of the preceding claims in which the form guiding said link chain (2) of said guiding rail is produced by a NC controlled machine.

11. A band conveyor for conveying material along a conveying path
comprising a driving chain wheel (1) and a link chain (2) having elements (3) linked by articulations (4) and guided over said driving chain wheel (1) and comprising a straight or regularly curved run (5) in the region of said conveying path,
and comprising a guiding rail for guiding said link chain (2) between said driving chain wheel (1) and said run (5) along a chain transition track (6),
said guiding rail is constructed such that said link chain (2) experiences polygonal excitations along said link chain (2) in said transition between said run (5) and said driving chain wheel (1) along said transition chain track (6), which polygonal excitations substantially compensate in total,
and the chain transition track (6) comprises at least one additional location resulting in polygonal excitations, between said transition between said straight run (5) and said chain transition rail (6) on the one hand and said transition between said chain transition rail (6) and said driving chain wheel (1) on the other hand,
**characterised in that** said chain transition track (6) comprises a circular arc track portion adjacent to said run (5) and a further straight track portion.

12. The band conveyor according to claim 11 in which said chain transition track (6) consists exclusively of circular arc track portions and straight track portions.

13. The band conveyor according to claim 12 in which said chain transition track (6) consists of exactly one circular arc track portion and exactly one straight track portion.

14. The band conveyor according to one of claims 11 - 13 in which the tooth number of said driving chain wheel (1) is at least 9.

15. The band conveyor according to one of claims 11 - 14 in which said link chain (2) is guided in said chain transition track (6) and in the adjacent portion of said run (5) such that it has essentially only a longitudinal degree of freedom.

16. The band conveyor according to one of claims 11 - 15 in which on both sides of said driving chain wheel (1) a respective guiding rail and a respective run (5) adjacent therewith are provided.

17. The band conveyor according to claim 16 having a further chain wheel at an end of said link chain (2) opposed to said driving chain wheel (1) and having a respective guiding rail on both sides of said further chain wheel, two straight runs (5) of said link chain (2) being extended between these guiding rails and the guiding rails provided on both sides of said driving chain wheel.

18. The band conveyor according to one of claims 11 - 17 being a band pressing device and comprising two link chains (2), at least one guiding rail being provided for each link chain (2).

19. The band conveyor according to one of claims 11 - 18 in which said chain transition track (6) is longer than the length of an element (a) of said link chain (2).

## Revendications

1. Procédé pour fabriquer un dispositif de transport par bande pour le transport de matériau le long d'un itinéraire de transport,
pour lequel dispositif de transport par bande une chaîne à maillons (2) avec des maillons (3) associés par des articulations (4) est guidée par une roue d'entraînement de la chaîne (1) et présente un brin rectiligne ou courbé régulièrement (5) dans le secteur de l'itinéraire de transport,
pour lequel procédé la chaîne à maillons (2) est guidée par la roue d'entraînement de la chaîne (1) et un rail de guidage pour guider la chaîne à maillons (2) est installé entre la roue d'entraînement de la chaîne (1) et le brin (5) le long d'une voie de transition de la chaîne (6),
le rail de guidage est disposé de façon à ce que la chaîne à maillons (2) reçoit lors le passage entre le brin (5) et la roue d'entraînement de la chaîne (1) le long de la voie de transition de la chaîne (6), des excitations à effet de polygone le long de la chaîne à maillons (2), qui se compensent largement au total,
et pour la forme du rail de guidage une approche est utilisée, qui présente entre le transfert entre le brin rectiligne (5) et la voie de transition de la chaîne (6) d'un côté et le transfert entre la voie de transition de la chaîne (6) et la roue d'entraînement de la chaîne (1) d'un autre côté, au moins une autre partie qui conduit à des sollicitations à effet de polygone,
**caractérisé par le fait que** l'approche contient une partie en arc de cercle de la voie rattachée au brin (5) et une autre partie rectiligne de la voie.

2. Procédé suivant la revendication 1, pour lequel la voie de transition (6) de la chaîne à maillons (2) est calculé au moyen d'un procédé d'optimisation informatique, lors lequel l'ensemble des excitations à effet de polygone de la chaîne à maillons (2) est minimisé.

3. Procédé suivant une des revendications présentes, pour lequel la voie de transition de la chaîne (6) est plus longue que la longueur des éléments (a) de la chaîne à maillons (2).

4. Procédé suivant une des revendications présentes, pour lequel une approche avec au moins trois variables (R_{B}, B, L) est utilisée pour la forme du rail de guidage.

5. Procédé suivant une des revendications précédentes, pour lequel l'approche contient exclusivement des parties en arc de cercle de la voie et des parties rectilignes de la voie.

6. Procédé suivant la revendication 5, pour lequel l'approche contient exactement une partie en arc de cercle de la voie et exactement une partie rectiligne de la voie.

7. Procédé suivant une des revendications précédentes, pour lequel le calcul de l'ensemble des excitations à effet de polygone pour l'optimisation tient compte des superpositions des excitations à effet de polygone individuelles dans la voie de transition de la chaîne (6).

8. Procédé suivant une des revendications précédentes, pour le moins suivant la revendication 3, pour lequel après la diminution de l'ensemble des excitations à effet de polygone par optimisation de l'approche, une correction de la voie de transition de la chaîne (6) ainsi obtenue est effectuée, pour laquelle celle-ci est corrigée le long de la longueur d'un élément de chaîne (a) et reste inchangée en dehors de cette longueur d'un élément de chaîne (a).

9. Procédé suivant une des revendications précédentes, pour lequel la chaîne à maillons (2) est guidée dans la voie de transition de la chaîne (6) et dans le secteur de brin (5) ensuite rattaché, de façon à ce qu'elle ait essentiellement uniquement un degré de liberté longitudinale.

10. Procédé suivant une des revendications précédentes, pour lequel la forme du rail de guidage guidant la chaîne à maillons (2) est conçue au moyen d'une machine à commande numérique.

11. Dispositif de transport par bande pour le transport de matériau le long d'un itinéraire de transport
avec une roue d'entraînement de la chaîne (1) et une chaîne à maillons (2) guidée par la roue d'entraînement de la chaîne (1) avec les maillons (3) associés par les articulations (4) et un brin rectiligne ou courbé régulièrement (5) dans le secteur de l'itinéraire de transport,
et avec un rail de guidage pour guider la chaîne à maillons (2) entre la roue d'entraînement de la chaîne (1) et le brin (5) le long d'une voie de transition de la chaîne (6),
où le rail de guidage est disposé de telle façon que la chaîne à maillons (2) reçoit lors du passage entre le brin (5) et la roue d'entraînement de la chaîne (1) le long de la voie de transition de la chaîne (6), des excitations à effet de polygone le long de la chaîne à maillons (2) qui se compensent largement au total,
et la voie de transition de la chaîne (6) entre le transfert entre le brin (5) et la voie de transition de la chaîne (6) d'un côté et le transfert entre la voie de transition de la chaîne (6) et la roue d'entraînement de la chaîne (1) d'un autre côté, présente au moins une autre partie qui conduit à des excitations à effet de polygone,
**caractérisé par le fait que** la voie de transition de la chaîne (6) contienne une partie en arc de cercle de la voie rattaché au brin (5) et une autre partie rectiligne de la voie.

12. Dispositif de transport par bande suivant la revendication 11, pour lequel la voie de transition de la chaîne (6) contient exclusivement des parties en arc de cercle de la voie et des parties rectilignes de la voie.

13. Dispositif de transport par bande suivant la revendication 12, pour lequel la voie de transition de la chaîne (6) contient exactement une partie de cercle de la voie et exactement une partie rectiligne de la voie.

14. Dispositif de transport par bande suivant une des revendications 11-13, pour lequel le nombre de dents de la roue d'entraînement de la chaîne (1) est au moins égal à 9.

15. Dispositif de transport par bande suivant une des revendications 11-14, pour lequel la chaîne à maillons (2) est guidée dans la voie de transition de la chaîne (6) et dans le secteur de brin ensuite rattaché, de telle façon qu'elle a pour l'essentiel uniquement un degré de liberté longitudinal.

16. Dispositif de transport par bande suivant une des revendications 11-15, pour lequel sont prévus des deux côtés de la roue d'entraînement de la chaîne (1) un rail de guidage et un brin s'y rattachant (5).

17. Dispositif de transport par bande suivant la revendication 16, pour lequel est prévue à l'extrémité de la chaîne à maillons (2) opposée à la roue d'entraînement de la chaîne (1) une autre roue à chaînes et sur chaque des deux côtés de cette autre roue à chaînes un rail de guidage, et deux brins rectilignes (5) de la chaîne à maillons (2) sont disposés entre ces rails de guidage et les rails de guidage prévu sur les deux côtés de la roue d'entraînement de la chaîne.

18. Dispositif de transport par bande suivant une des revendications 11-17, qui est conçue comme dispositif de serrage à bande et prévue avec deux chaînes à maillons (2), pour lequel est prévu au moins un rail de guidage par chaîne à maillons (2).

19. Dispositif de transport par bande suivant une des revendications 11 - 18, pour lequel la voie de transition de la chaîne (6) est plus longue que la longueur des éléments (a) de la chaîne à maillons (2).
